# EUROPEAN PATENT APPLICATION

(11) **EP 4 550 745 A1**
(43) Date of publication of application: **07.05.2025**
(21) Application number: 24209617.0
(22) Date of filing: 29.10.2024
(51) Int. Cl.: H04L 43/0817, H04W 24/04

(54) **ROUTER CONNECTIVITY ENHANCEMENTS**

(30) Priority: 31.10.2023 GB 202316675; 30.11.2023 GB 202318337
(71) Applicant: Vodafone Group Services Limited, Newbury RG14 2FN (GB)
(72) Inventor: PASQUARIELLO, Giosino, London, W2 6BY (GB)
(74) Representative: Boult Wade Tennant LLP

(57) **Abstract**

Method and system for managing a router configured to provide internet communications over a first communication protocol, comprising determining operating characteristics of the router. Detecting a degradation of router performance. Transmitting data indicating the determined operating characteristics from the router to a mobile device using a second wireless communication protocol.

## Description

### Field of the Invention

The present invention relates to a system and method for managing and monitoring a router that provides internet communication services to clients such as mobile devices.

### Background of the Invention

Broadband routers provide internet communication services to a plurality of clients and devices in a home or office environment, preferably over Wi-Fi but also using ethernet or other wired connections. Routers often encounter problems or issues, especially in the home environment where they are rarely monitored or serviced. When this occurs, the user may try to resolve the issue but often needs to contact their internet service provider. This inconveniences the user because the problem only becomes apparent when they want to make use of broadband services, and can be costly to resolve as it usually involves a human operator to help the user resolve their problems.

Automated call centres and virtual chat bots may be able to resolve some problems, but these can be frustrating to use and do not always resolve every issue. Therefore, a more proactive approach to fixing problems or avoiding them from occurring is desirable.

Therefore, there is required a method and system that overcomes these problems.

### Summary of the Invention

A router provides internet communication services to one more clients over a wired or wireless communication protocol, such as ethernet or Wi-Fi. The router is connected to the internet either using a cable connection (e.g., over a telephone line, optic fibre, or dedicated cable) or by a wireless connection using a cellular telecommunications system. The router may contain one or more modems or other interfaces. The router also has a plurality of operating characteristics. These operating characteristics can include settings (either factory set or user selectable) and dynamic conditions. For example, the operating characteristics may include variables or indicators defining the internet connection. For example, this could be a binary result (connected/disconnected), up/down speed, packet error rate or other metrics. The operating characteristics may also include physical attributes of the router such as power connections and cable connections (e.g., to the telephone line, fibre optic cable, or dedicated cable connection status) stating a connected or disconnected status. Other operating characteristics may include firmware version, memory usage, Wi-Fi status, up-time or other software attributes indicating the operational health of the router.

The router or a client (e.g., a mobile device that obtains internet communication services from the router) may detect an abnormality or degradation in router performance or operating conditions. This may be a direct detection because the router is actively transmitting the operating conditions or characteristics to the client device at regular intervals and these operating characteristics indicate to the mobile device a problem or issue with the router. This may also be an indirect detection because the client device receives degraded Wi-Fi or internet communication services from the router. In order to receive the operating characteristics of the router (which may indicate a loss of Wi-Fi signal or interference) a different communication protocol (wired or wireless) is used to transmit the operating characteristics of the router to the client device. The different communication protocol may be Bluetooth or BLE, for example, but other short ranged wireless protocols may be used (e.g., NFC). The mobile device or a mobile application on the mobile device may determine that the abnormality or degradation in router performance is occurring based on the operating characteristics received from the router over the different communication protocol or by other techniques.

Either the router or the client device may determine that these is an issue with the operation of the router. In an example implementation, the client device may send these operating characteristics (or a subset of them) to an external network or server (e.g., the internet service provider, a telecommunications company, or a managing entity or intermediary). For example, the transmitted message may include only the operating characteristic that indicate the problem (e.g., that the telephone line cable has been unplugged from the router) or all operating characteristics received by the client device.

The client device may not be able to rely on an internet connection provided by the router (this may be a symptom of the problem). Therefore, the client device (e.g., a mobile device such as a smartphone) may transmit information indicating the operating characteristics to the external server using a different communication protocol (e.g., using a cellular telecommunications network). In some example implementations, the external server may take one or more actions to rectify the degradation in router performance, that may be directly due to the router or be an external problem (e.g., an issue with a local exchange). An application or firmware on the router may receive requests received via BLE from the client (e.g., UE) and evaluates them. If the router receives a command to restart the router, to reset it to the default state or to turn Wi-Fi on or off, the application may send the corresponding commands to the operating system of the router. The router may receive a query from the client asking for information to indicate what is wrong or to indicate a particular problem and it may send an issue code to the client in response (or an application executing on the client).

The external server may also facilitate a solution (e.g., by sending appropriate or targeted tips or instructions to the user via the mobile device). These tips may be selected based on the operating characteristics, for example.

In an example implementation, this process may occur after the router has a detected a problem or error (e.g., a degradation in performance, such as a loss or reduction in broadband service and/or Wi-Fi) and after the router has attempted to rectify this by taking its own internal actions or carrying out tests. Alternatively, the above-described method may take place without the router attempting any corrective actions.

In accordance with a first aspect there is provided a method for managing a router configured to provide internet communications over a first communication protocol, the method comprising the steps of:
determining operating characteristics of the router;
detecting a degradation of router performance; and
transmitting data indicating the determined operating characteristics from the router to a mobile device using a second wireless communication protocol. This enables the mobile device to receive the operating characteristics of the router even if the router cannot communicate with the mobile device over another communications channel (e.g., Wi-Fi or by using an internet connection).

Optionally, the mobile device may transmit the data indicating the determined operating characteristics to a server in response to the detected degradation, using a third wireless communication protocol. Therefore, the server can receive operating characteristics and be able to determine the performance of the router or further upstream service providers, as soon as a problem arises or is indicated. The use of different communication types enables this information to be sent even when internet services have ceased or been degraded. Because the operating characteristics are transmitted in response to the detected degradation (e.g., only when there is a problem) then this saves bandwidth on the network where many such routers may operate. When the router detects the degradation then sending the operating characteristics to the mobile device may trigger the step of sending the operating characteristics from the mobile device to the server. When the mobile device (or an application on the mobile device) detects the degradation in performance of the router (based on the operating characteristics or based on its own determination that internet connectivity is being adversely affected) then the mobile device may trigger the transmission to the server. The mobile device may determine the degradation of router performance (e.g., a loss or reduction in Wi-Fi and/or broadband service or speed) based on the received operating characteristics or by using other information (e.g., a mobile application monitoring service levels and comparing them to one or more thresholds).

Optionally, the third wireless communication protocol may be any one of: a cellular communication protocol, a satellite communication protocol, or a Wi-Fi connection to a second router; and/or
wherein the first communication protocol may be a wireless communication protocol and/or Wi-Fi; and/or
wherein the second communication protocol may be any one of: Bluetooth, Bluetooth Low Energy, BLE, Zigbee, near field communication, NFC, or a non-Wi-Fi short or midrange protocol. Other alternative communication protocols may be used. The Bluetooth connection may be set up with the mobile device in advance and preferably when the router is being set up and installed. An activation or setup process may be carried out in advance (e.g., when installing and setting up a mobile application on the mobile device).

Optionally, the method may further comprise the step of:
the server initiating automatic testing of broadband communications with the router in response to receiving the operating characteristics of the router from the mobile device. This may take place either when the server detects an abnormality in any one or more of the operating characteristics, when particular operating characteristics indicate an abnormality (e.g., a slow-down in broadband speed or increased latency) or when triggered by the detection in the degradation of performance of the router (either by the router or by the mobile device or by an application operating on the mobile device).

Optionally, the method may further comprise the steps of:
the server applying updated configuration settings to the router based on the operating characteristics of the router transmitted to the server; and/or
the server causing the router to reboot. Other actions may take place, including sending the user a notification on the mobile device using the application (e.g., a push notification). The notification may instruct the user to interact with the router or other hardware. For example, the user may be instructed to check that particular cable(s) (e.g., a telephone cable) is or are plugged into the router or that power is connected and turned on.

Optionally, the updated configuration settings may be transmitted to the mobile device over the third communications protocol and transmitted to the router from the mobile device over the second communications protocol. Therefore, both the notification of the issue with router performance and its solution uses a separate communication protocol to that used to supply internet services to clients, including the mobile device.

Optionally, the method may further comprise the step of:
the mobile device determining an action to resolve the degradation of router performance based on the received operating characteristics. This could include a manual action recommended to a user (e.g., an alert, notification, or instruction to a user of the mobile device to plug in a cable of the router, such as a telephone cable) or an automated action, such as a command sent to the router over the second wireless communication protocol.

Optionally, the action may comprise any one or more of:
the mobile device transmitting the data indicating the determined operating characteristics to a server in response to the detected degradation, using a third wireless communication protocol;
the mobile device sending an instruction to the router using the second wireless communication protocol to alter the router configuration;
the mobile device sending an instruction to the router using the second wireless communication protocol to reboot; and/or
the mobile device providing an instruction to the user to change a configuration of the router. Other actions may be taken.

Optionally, the operating characteristics of the router may comprise any one or more of:
internet connection status of the router;
a landline connection status;
a wired internet connection status;
Wi-Fi channel or channels transmitted by the router;
Wi-Fi disabled/enabled;
time since a reboot of the router;
information regarding cable or cables connected to the router;
memory use of the router;
number of connected Wi-Fi clients; and/or

Bluetooth or BLE connection status. Other operating characteristics may be used. All operating characteristics or only a subset (e.g., those determined to be abnormal) may be transmitted to the mobile device and/or the server.

Optionally, the detected degradation router performance is any one or more of:
a reduction in internet communication service provided by the router;
a reduction in data transmission rate;
loss of a Wi-Fi connection to the mobile device;
a fault with a wired internet connection of the router;
memory usage of the router beyond a threshold amount;
loss of internet provision; and

Wi-Fi channel interference. For example, the fault with the wired internet connection may be data indicating that the cable connection to a telephone line has been broken (e.g., the plug has been pulled out).

Preferably, the first communication protocol may be different to the second wireless communication protocol. Therefore, loss of the first communication protocol (e.g., Wi-Fi) does not stop the operating characteristics and/or an indication of the degradation, from being sent to the mobile device (e.g., a cellular telephone or smartphone).

Optionally, the detected degradation of router performance may be detected at the mobile device by an application of the mobile device. This may be detected by comparing the received operating characteristics with thresholds or preferable values or simply determining that the router (consumer-premises equipment - CPE) is offline. This may also be detected by testing the connection (e.g., checking the quality of the Wi-Fi signal, determining available bandwidth and/or upload/download speed or latency).

Optionally, the detected degradation of communications with the router may be detected at the router. For example, the router can determine a loss of internet connectivity or one or more communication interface errors.

Optionally, the degradation of router performance may be detected by comparing operating characteristics of the router against one or more thresholds. These may be predetermined thresholds (e.g., latency, upload/download speed) or dynamic thresholds that vary depending on demand. The thresholds may be updated externally, e.g., received from the external server.

Preferably, the data transmitted to the mobile device indicating the determined operating characteristics from the router may be received by an application on the mobile device. The application may use an existing Bluetooth or other short range wireless communication protocol to obtain or receive the operating characteristics from the router. The router may send these operating characteristics to the application at intervals (during both normal and abnormal performance conditions), when triggered by the detection of any abnormal condition or when a degradation in performance is detected or under any other condition. This may be received as a push notification. The application may receive the operating characteristics or a request may be made by the application. Again, this may occur at intervals or whenever the short range wireless communication protocol between the router and the mobile device is operational (i.e., in range). Preferably, the connection may be automatic.

In accordance with a second aspect, there is provided a system comprising
a router configured to:
   provided internet communications over a first communication protocol;
   determine operating characteristics of the router;
   receive a request for the operating characteristics from a mobile device; and
   in response to the request transmit data indicating the determined operating characteristics from the router to the mobile device using a second wireless communication protocol; and
a mobile device (e.g., a mobile application within the mobile device) configured to:
   request the operating characteristics of the router;
   receive the operating characteristics of the router over the second wireless communication protocol; and
   detect a degradation of router performance.

Optionally, the mobile device may be further configured to transmit the data indicating the determined operating characteristics to a server in response to the detected degradation, using a third wireless communication protocol, the system may further comprise:
a server configured to:
receive the operating characteristics.

Optionally, the server may be further configured to apply updated configuration settings and/or send operation instructions to the router based on the operating characteristics of the router received from the mobile device, wherein the updated configuration settings and/or send operation instructions are transmitted to the mobile device over the third communications protocol and transmitted to the router from the mobile device over the second communications protocol. The operating characteristics may include a type and version of the router so that appropriate configuration settings may be applied to improve the degraded performance of the router. The updated configuration settings may cause the router to carry out additional instructions (e.g., reboot, reset to factory defaults, etc.).

According to a third aspect, there is provided a computer-readable medium comprising instructions which, when executed by a computer, cause the computer to carry out steps of a method for managing a router configured to provide internet communications over a first wireless communication protocol, the method comprising the steps of:
determining operating characteristics of the router;
detecting a degradation of router performance; and
transmitting data indicating the determined operating characteristics from the router to a mobile device using a second wireless communication protocol.

Optionally, the method may further comprise the step of:
transmitting the data indicating the determined operating characteristics to a server in response to the detected degradation, using a third wireless communication protocol.

The methods described above may be implemented as a computer program comprising program instructions to operate a computer. The computer program may be stored on a computer-readable medium, including a non-transitory computer-readable medium.

The computer system may include a processor or processors (e.g. local, virtual or cloud-based) such as a Central Processing Unit (CPU), and/or a single or a collection of Graphics Processing Units (GPUs). The processor may execute logic in the form of a software program. The computer system may include a memory including volatile and non-volatile storage medium. A computer-readable medium (CRM) may be included to store the logic or program instructions. For example, embodiments may include a non-transitory computer-readable medium (CRM) storing software comprising instructions executable by one or more computers which, upon such execution, cause the one or more computers to perform the disclosed methods. Non-transitory CRM may refer to a CRM that stores data for short periods or in the presence of power such as a memory device or Random Access Memory (RAM). For example, a non-transitory computer-readable medium may include storage components, such as, a hard disk (e.g., a magnetic disk, an optical disk, a magneto-optic disk, and/or a solid state disk), a compact disc (CD), a digital versatile disc (DVD), a floppy disk, a cartridge, and/or a magnetic tape. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a high level flowchart of a method for managing a router;
FIG. 2 shows a schematic diagram of a system for performing the method of Figure 1;
FIG. 3 shows a flowchart of a method for activating the system of Figure 2;
FIG. 4 shows a flowchart of further example steps in the method of Figure 1;
FIG. 5 shows a schematic diagram of screen shots of a mobile device used in the system of Figure 2;
FIG. 6 shows schematic diagrams of different statuses of the system of Figure 2;
FIG. 7 shows schematic diagrams of further different statuses of the system of Figure 2;
FIG. 8 show a schematic diagram of a different status of the system of Figure 2; and
FIG. 9 shows schematic diagrams of different operating conditions of the system of Figure 2.

It should be noted that the figures are illustrated for simplicity and are not necessarily drawn to scale. Like features are provided with the same reference numerals.

### Detailed description of the preferred embodiments

A method and system are provided in which a mobile device is used to send router operating characteristic data to a server via a mobile device so that connection issues can be resolved, especially when a broadband connection is unavailable. The mobile device receives the operating characteristics over a communications protocol such as Bluetooth or Bluetooth Low Energy (BLE). For example, log files and parameters may be read out remotely using BLE to determine where any "self-healing" (by the router) fails, providing deeper error analysis and problem resolution. The information obtained in this way may be used to accelerate the fault resolution process.

The mobile device can transmit the operating characteristics over a different communication protocol, such as a cellular connection, and/or process or evaluate the operating characteristics internally.

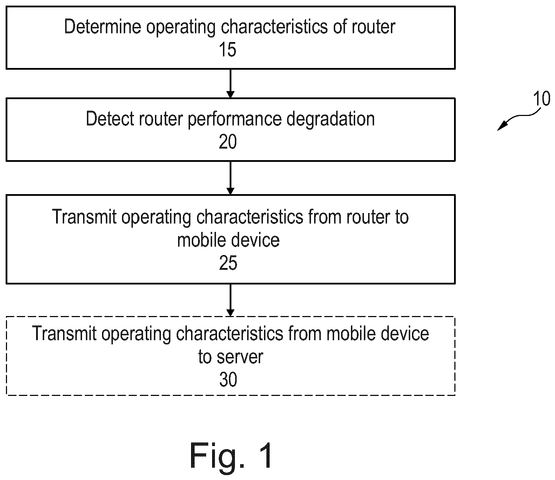

Figure 1 shows a flowchart of a method 10 for managing a router. At step 15, operating characteristics of the router and determined. At step 20, router performance degradation is detected. This may be based on the operating characteristics or by other means (e.g., loss of internet connectivity by clients obtaining Wi-Fi services from the router). At step 25, the operating characteristics are transmitted from the router to a mobile device (e.g., a mobile device or other client that usually obtains internet connectivity using the router). This may use a communication protocol such as Bluetooth or BLE and be different from a communication protocol (e.g., Wi-Fi) that normally provides internet communication services to the mobile device or client. Step 25 may take place before or at the same time as steps 15 and/or 20, especially when it is the mobile device that detects the degradation in router performance. At step 30, the operating characteristics may be optionally transmitted to a server or external server from the mobile device. The transport mechanism is a further communication protocol (e.g., cellular, 2G, 3G, LTE, 4G, 5G, 6G, etc.) different to Wi-Fi (or other channel used to provide broadband services to clients by the router) and different to Bluetooth or BLE (or the channel type used to send the operating characteristics from the router to the mobile device). The method 10 may be implemented by a system or be part of the router and/or the mobile device.

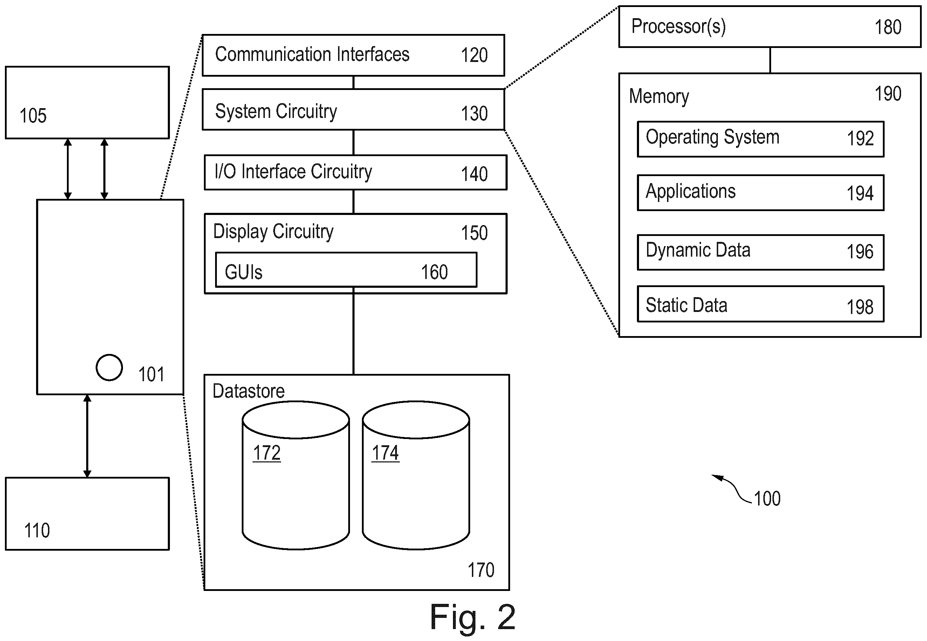

As shown in Figure 2, the system 100 includes a mobile device 101 that has a number of components including communication interfaces 120, system circuitry 130, input/output (I/O) circuitry 140, display circuitry and interfaces 150, and a datastore 170. The system circuitry 120 can include one or more processors or CPUs 180 and memory 190. The system circuitry 130 may include any combination of hardware, software, firmware, and/or other circuitry. The system circuitry 130 may be implemented, with one or more systems on a chip (SoC), application specific integrated circuits (ASIC), microprocessors, and/or analog and digital circuits. The router 105 is shown as having at least two communication protocols or channels with the mobile device 101. For example, these may be Wi-Fi (e.g., IEEE 802.11 and variants) and Bluetooth, for example. The mobile device 101 may optionally communicate with the external server 110 over a different communication protocol (preferably cellular), although this is not essential for operation of the system 100. These communications may be two-way, as shown by the arrows.

The mobile device 101 may run an operating system such as iOS or Android, for example. The mobile device 101 may run one or more mobile applications, such as one used to obtain the operating characteristics of the router and determine the degradation or changes in router performance. In some example implementations, the mobile application may transmit the operating characteristics to the server 110 in addition to any of the other described actions.

The display circuitry may provide one or more graphical user interfaces (GUIs) 160 and the I/O interface circuitry 140 may include touch sensitive or non-touch displays, sound, voice or other recognition inputs, buttons, switches, speakers, sounders, and other user interface elements. The I/O interface circuitry 140 may include microphones, cameras, headset and microphone input /output connectors, Universal Serial Bus (USB) connectors, and SD or other memory card sockets. The I/O interface circuitry 140 may further include data media interfaces (e.g., a CD-ROM or DVD drive) and other bus and display interfaces.

The memory 190 may include volatile (RAM) or non-volatile memory (e.g., ROM or Flash memory). The memory may store the operating system 192 of the computer system 100, applications or software 194, dynamic data 196, and/or static data 198. The datastore or data source 170 may include one or more databases 172, 174 and/or a file store or file system, for example.

The method and system may be implemented in hardware, software, or a combination of hardware and software. The method and system may be implemented either as a server comprising a single computer system or as a distributed network of servers connected across a network. Any kind of computer system or other electronic apparatus may be adapted to carry out the described methods.

In an example implementation of system 100, a mobile application is installed on the mobile device 101. The mobile device 101 has at least Wi-Fi, cellular (e.g., 2G, 3G, 4G, 5G, 6G, etc.) and Bluetooth (e.g., BLE) communication interfaces. The router 105 also has one or more Wi-Fi interfaces or radios and Bluetooth connectivity, so that it can connect wirelessly to the mobile device 101 over different communication protocols. The router 105 also has broadband modem functionality and components, including a cable interface to a telephone system, for example.

Once installed, the mobile application can initiate a Bluetooth connection between the mobile device 101 and the router 105 (e.g., Bluetooth pairing). The Bluetooth pairing can be permanent so a Bluetooth or BLE connection can be made automatically whenever the mobile device 101 is in Bluetooth range of the router 105.

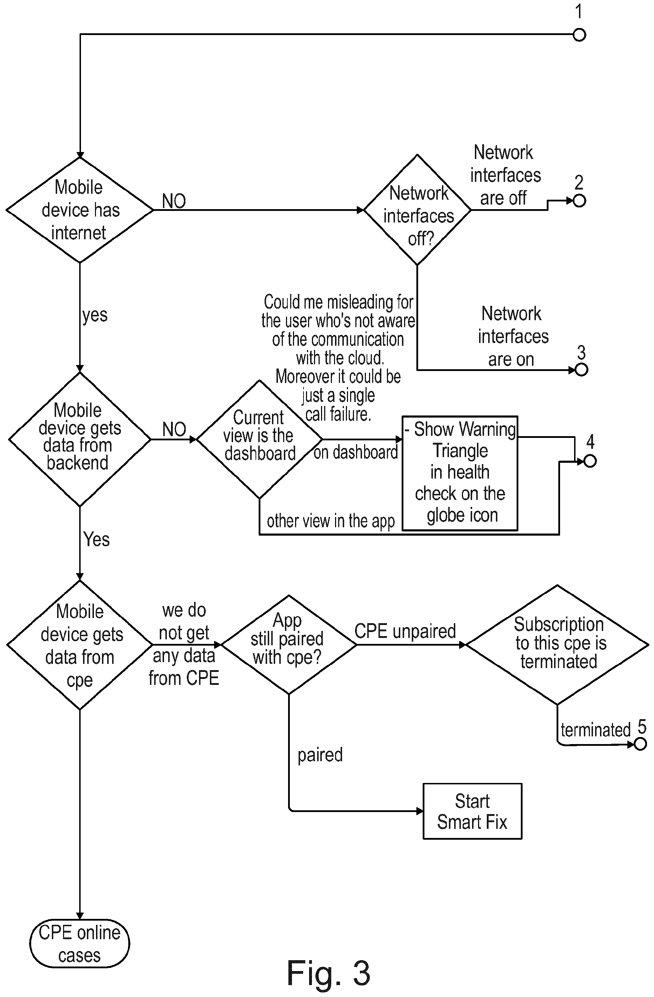

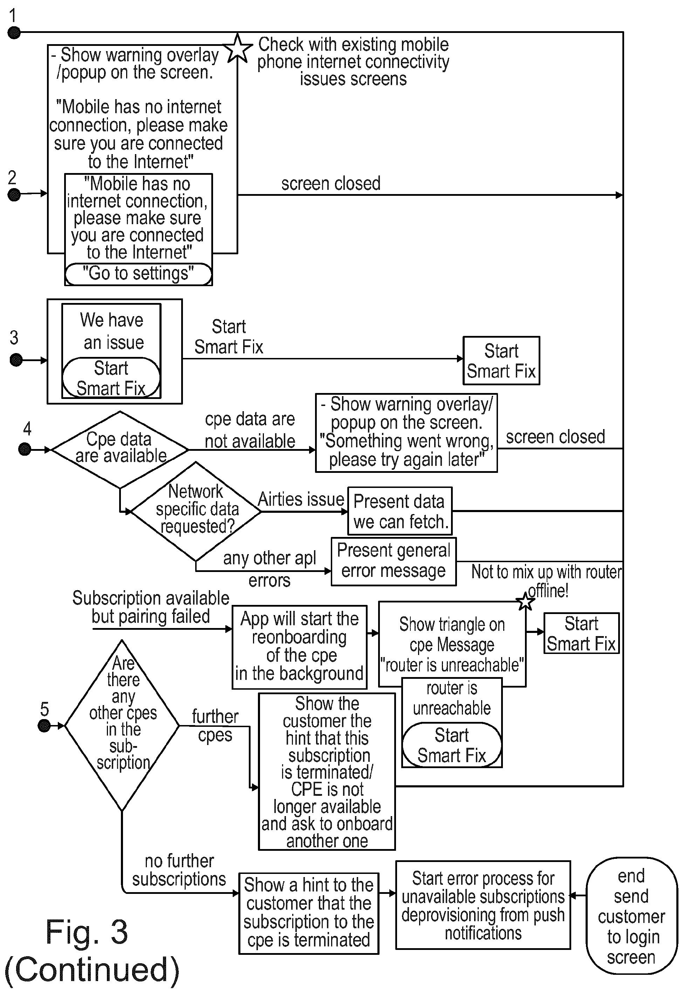

In the figures (Figure 3 to 9), the method and mobile application may be described as "Smart Fix". The mobile application can provide notifications to a user of the mobile device 101. For example, the mobile application can inform the user (customer) of a degradation in router performance, such as a loss in broadband or internet connectivity using notifications or messages on a screen.

Figure 3 shows a flowchart of a method for setting up or activating the application and Smart Fix service on the mobile device 101. In the figure, the router 105 is described as a CPE (consume-premises equipment). Figure 3 illustrates different settings to be checked and set by the user to allow the service to be activated. This figure also shows a login process and Bluetooth pairing procedure with the router 105. The login and subscription processes relates to a secure connection with the external server 110. Preferably, activation is carried out using secure communications and encryption.

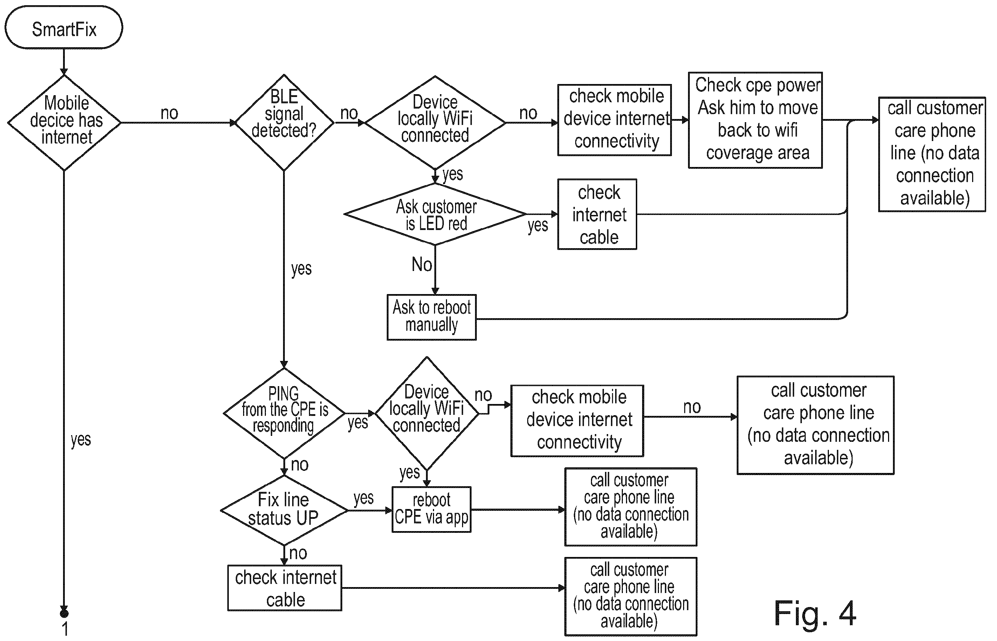

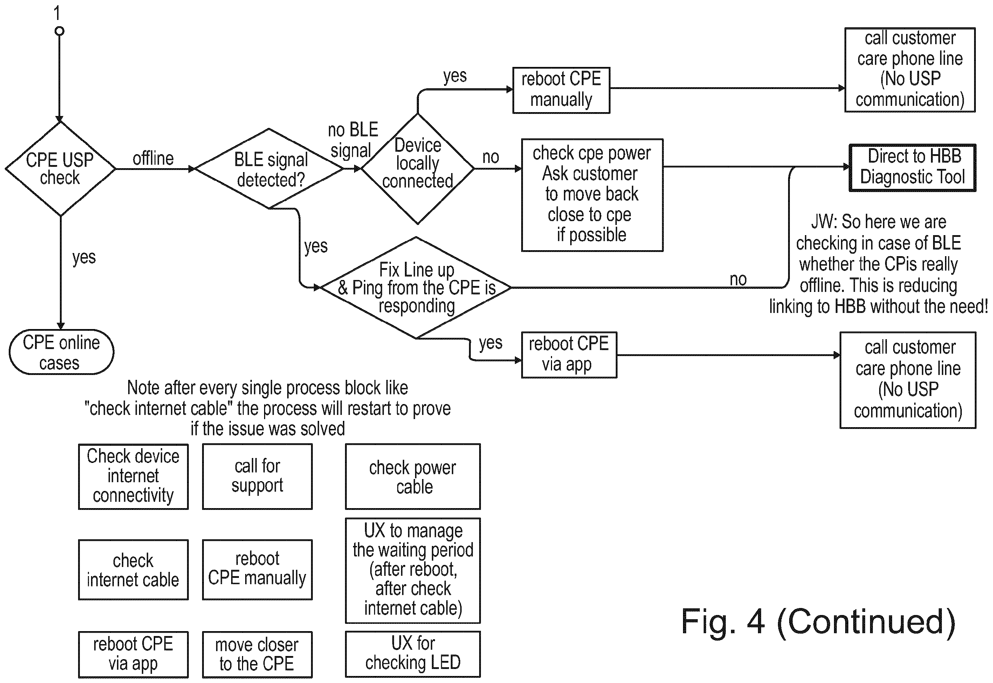

Figure 4 shows a flowchart of the operation of an example implementation of the method 10 once the activation process has successfully completed (login to the external server 110 and pairing with the router 105). In this example implementation, the degradation in router performance is indicated by a loss of internet at the mobile device 101 that is connected to the router by Wi-Fi (usually providing the internet communication services) and Bluetooth (BLE). A series of checks and tests are carried out with different steps taken depending on success or failure. Some steps and actions may be automated, some may initiated automatically but require user approval (e.g., reboot of the router from the mobile application), and others may be manual (e.g., prompting the user to contact a helpline or call centre from the application or in a telephone call, or instructing the user to check and plug in a cable at the router 105). The Bluetooth or BLE data transmission may be achieved using non-standard GATT services, for example.

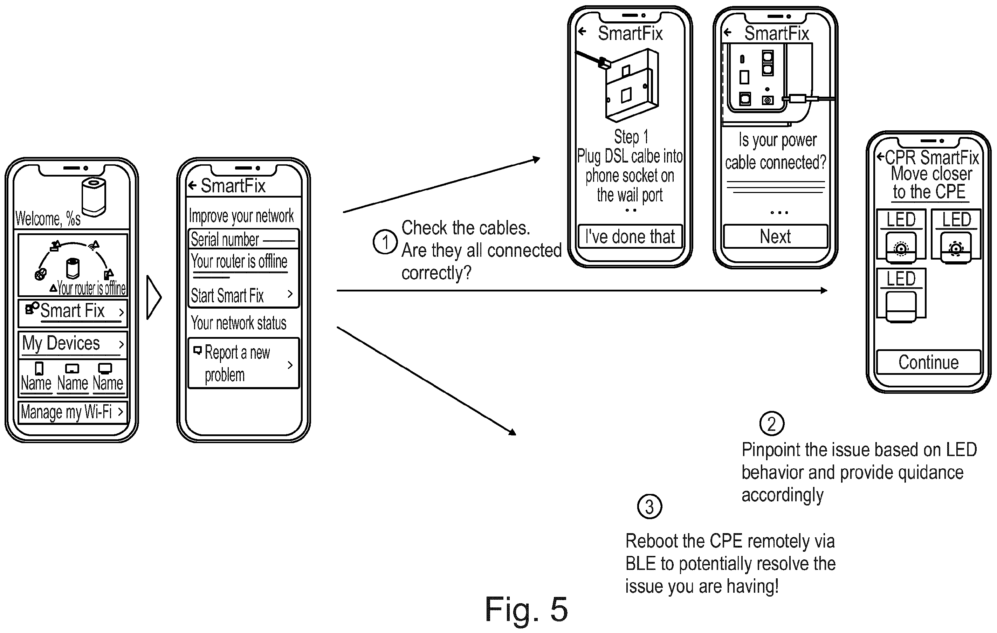

Figure 5 shows a set of example screen shots from the mobile application on the mobile device 101. These screen shots illustrate when a degradation in router performance is detected (e.g., before the user requires internet services provided by the router). Because the BLE connection remains available, actions on the router can be initiated from the mobile device even in the absence of Wi-Fi connectivity or internet connectivity. In some example implementations, the mobile application can receive messages and instructions from the external server 110 (e.g., using its cellular data connection) that can be relayed back to the router 105 when it is offline and so can resolve problems and restore normal (online) operation of the router 105. This may also be achieved without any user interaction or even notifications in some implementations.

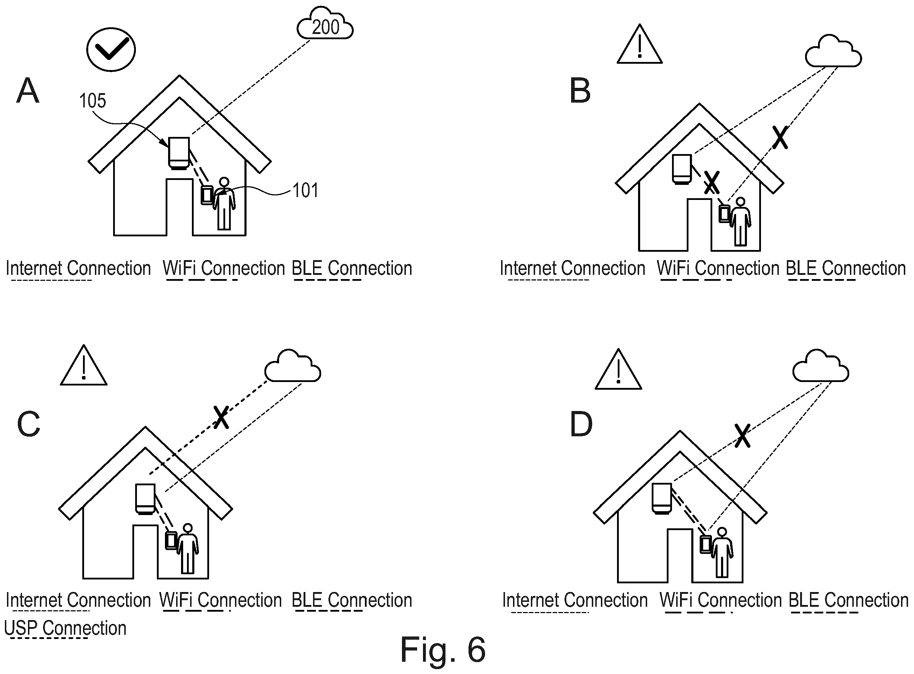

As well as a total loss of internet connectivity, other statuses of the system 100 can be encountered. Error statuses can be detected by the mobile application or router 105 (e.g., firmware executing on the router 105) and resolved using the system 100 and method 10. These different statuses are illustrated schematically in Figures 6 to 9.

Figure 6A illustrates schematically normal operation with the mobile device 10 having Wi-Fi and Bluetooth connections to the router 105 and the router having an active connection (e.g., over a cable telephone line) to the internet 200. As well as the router 105 being monitored, there may be one or more Wi-Fi extenders in the system (not shown in the figures). These extenders may be similarly monitored and action taken if their performance degrades in a similar way to that described with reference to the router 105.

The status of Figure 6A may be summarised as follows (e.g., operational characteristics). There are different alternatives that in this example, are all considered acceptable and not indicating a fault.

Figure 6A:
Internet Status: OK
Router Status: OK
Connection type of router: available (FTTH,
   xDSL, 4G, etc)
Router Reachable by USP (user services platform or ISP): OK
Router Reachable by BLE: Not necessary
Wi-Fi Status (Router): on
Extender Status: None / OK (no disconnection or weak link) / One or more extender has a weak link / one or more extender disconnected
Tips to show user: None / check power, check LED (if red flashing it may be that the Extender is too far away from closest Extender or the router) / other LED status to be mentioned (firmware update required)
Therefore, the extended status does not affect the success notification (tick in Figure A) and indicated on the mobile application).

The following figures (6B to 8) all show an abnormal status or degradation in router performance of various types detected by the system. At least some may be resolved automatically or using appropriate tips to the user selected based on the error type determined from the operating characteristics. The solutions and resolution actions may be determined by the mobile application or by the external server.

Figure 6B (router 105 has internet connection, but the Wi-Fi connection is broken. Mobile device is not connected via mobile connection to the router 105, mobile device is not connected to BLE):
Internet Status: OK
Router Status: OK
Connection type of router: available (FTTH,
   xDSL, 4G, etc.)
Router Reachable by USP (user services platform or ISP): OK
Router Reachable by BLE: Not necessary
Wi-Fi Status (Router): off
Extender Status: None / OK (no disconnection or weak link) / One or more extender has a weak link / one or more extender disconnected.

Tips to show user: error message that phone has no Internet connectivity (tip for user: check your mobile internet connection; check whether you are in range of a Wi-Fi signal and that Wi-Fi is switched on). A network health status may not be shown at all or just indicating an unknown status.

Figure 6C (Router not reachable via USP. Phone locally connected to Router via Wi-Fi. Phone has Internet Connectivity via Router. Wi-Fi User is in BLE range):
Internet Status: OK
Router Status: OK
Connection type of router: Via BLE
Router Reachable by USP (user services platform or ISP): No
Router Reachable by BLE: Yes
Wi-Fi Status (Router): on
Extender Status: Information about the paired extender(s) are coming from airties and are independent from the USP connection.

Tips to show user: The application is able to retrieve the status of WAN interfaces via BLE and it has internet access while it is connected to the router 105. For some reason, the issue is with the router 105 endpoint that is not connected to a MQTTbroker. Tips will be: Some of the services are not working (USP), reboot the CPE via the mobile application (or carried out automatically by the mobile application). The application is able to retrieve the status of WAN interfaces.

Figure 6D (Router not reachable via USP. Mobile device locally connected to th router 105 via Wi-Fi. Mobile device has Internet Connectivity via cellular interface and telecommunications system. User is in BLE range):
Internet Status: Not OK
Router Status: OK
Connection type of router: Via BLE
Router Reachable by USP (user services platform or ISP): No
Router Reachable by BLE: Yes
Wi-Fi Status (Router): on
Extender Status: Information about the paired extender(s) are coming from airties and are independent from the USP connection.

Tips to show user: Online state obtained from BLE, which additional information Check cables, reboot the router 105, call for support.

In case BLE is available and the method 10 can operate successfully, Wi-Fi devices can be read from the router 105 and the mobile device 101 can obtain information about the router 105 over BLE. The router 105 online status can be obtained in general as well as the internet connection status. The LED status is available. In case the router cannot be turned off and on by the customer, then this be achieved remotely by the external server 110.

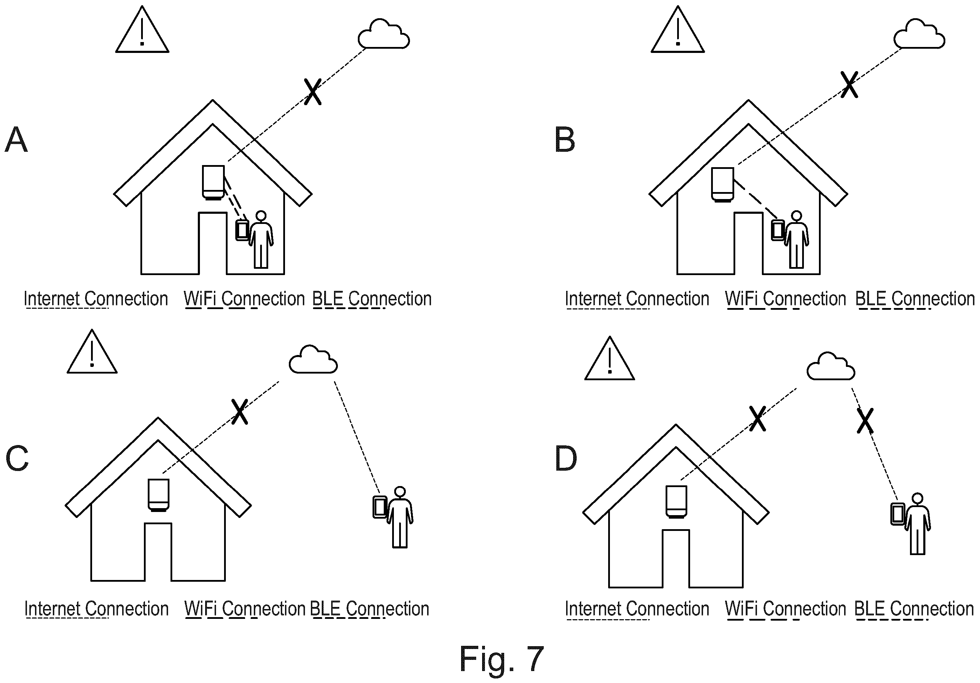

Figure 7A (Router not reachable via USP. Mobile device 101 locally connected to Router via Wi-Fi. Mobile device 101 has no Internet Connectivity):
Internet Status: Not OK
Router Status: OK
Connection type of router: Unknown
Router Reachable by USP (user services platform or ISP): No
Router Reachable by BLE: Yes
Wi-Fi Status (Router): on
Extender Status: Unknown.

If BLE is in range, then the mobile application can retrieve the status of the WAN interfaces. In case they are connected, the above points can be skipped and the router 105 can be reset via application.

Figure 7B (Router not reachable via USP. Outside BLE range / no access. Mobile device 101 locally connected. Mobile device 101 has no Internet Connectivity):
Internet Status: Not OK
Router Status: Not OK
Connection type of router: available (FTTH, xDSL, 4G, etc.)
Router Reachable by USP (user services platform or ISP): No
Router Reachable by BLE: Yes
Wi-Fi Status (Router): on
Extender Status: OK
Tips for user: 1.) Check LED status 2.) If red flash, check cabling 3.) Reset Router 4.) If red flash continues, call customer care. 5.) Move closer to the router 105. Check LEDs, check cables, reboot the router. Call support.

Figure 7C (Router not reachable via USP. Mobile device 101 is not locally connected. Main Wi-Fi is unknown. Mobile device 101 has Internet Connectivity):
Internet Status: Unknown
Router Status: Unknown
Connection type of router: Unknown
Router Reachable by USP (user services platform or ISP): No
Router Reachable by BLE: No
Wi-Fi Status (Router): Unknown
Extender Status: Unknown
Tips for user: 1.) Get closer to the router 105. 2.) Check LED status/Power check cables. 3.) Reboot router 105 4.). Call support.

Figure 7D (Router not reachable via USP. Mobile device 101 not locally connected. Main Wi-Fi status is unknown. Mobile device has no Internet Connectivity):
Internet Status: Unknown
Router Status: Unknown
Connection type of router: Unknown
Router Reachable by USP (user services platform or ISP): No
Router Reachable by BLE: No
Wi-Fi Status (Router): Unknown
Extender Status: Unknown
Tips for user: The mobile application immediately shows an error message that the device has no Internet connectivity (tip for user: check your mobile internet connection; check whether you are in reach of a Wi-Fi hotspot and that the Wi- Fi is switched on). A network health status may not be shown at all or just an unknown status.

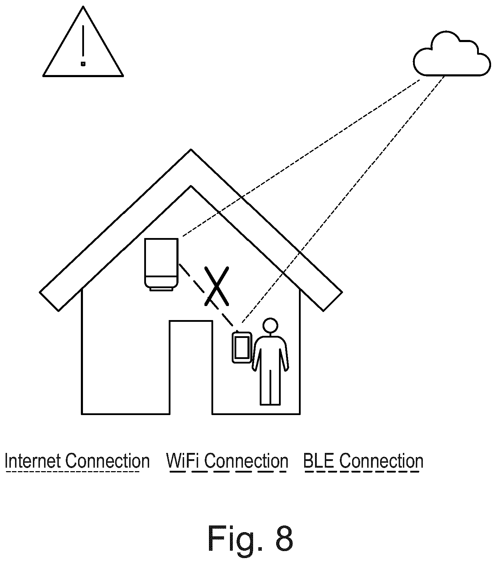

Figure 8 (The router 105 has internet connection, but the Wi-Fi connection is broken. The mobile device 101 is connected via a Bluetooth connection to the router 105): In this scenario the mobile application cannot determine whether the user is in Wi-Fi range and whether it is working. If the Wi-Fi results indicate "disabled", a suggestion to the user would be to turn it on.

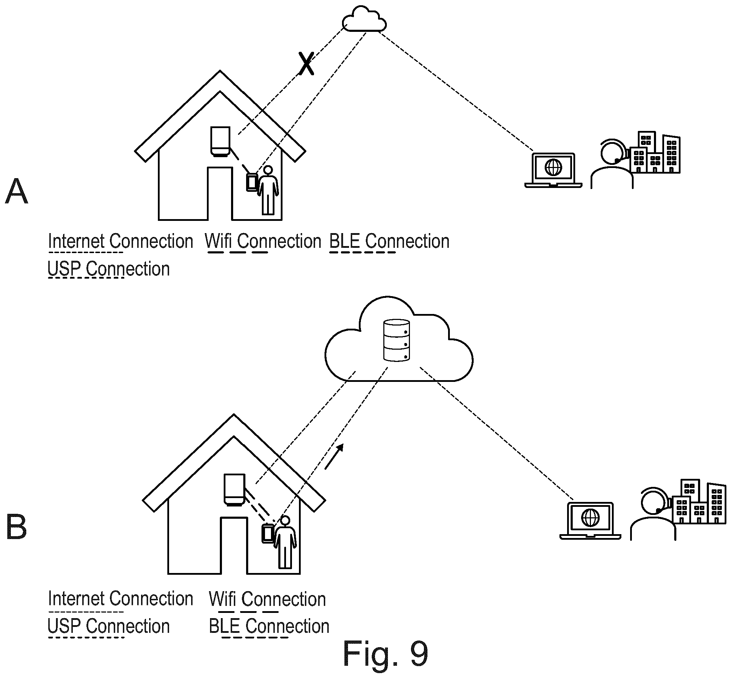

Figure 9A shows a schematic diagram of a customer care agent using a support tool to connect to the mobile application via the mobile or cellular network and retrieve data from the application via the BLE connection. This may be automatically achieved by the external server 110, as described above.

Figure 9B shows a schematic diagram of the user using the mobile application on the mobile device 101, which is in BLE reception range of the router 105. The mobile application requests data from the router 105 via BLE in the background. If the mobile application detects anomalies in the data (a degradation in router performance) e.g., that the router 105 is offline or is scraping the memory load, this these data are sent by the mobile application to the external server 110 (backend) for diagnostic purposes and made available to an application programming interface (API) so that it can be used for remote diagnosis, automated repair or guided repair.

If the diagnosis data (operating characteristics of the router 105) are also available to the mobile application via Wi-Fi, then these data may be collected using this communication interface at the same time as BLE to provide redundancy and improve reliability.

The following provides example messaging achieved over Bluetooth or BLE between the router 105 and the mobile device 101 (GATT Characteristics). Preferably, these are encrypted:
Ethernet Status
Ethernet Stats
Ethernet Stats ID
Optical Interface Status
Optical Interface Stats
Optical Stats ID
DSL Status
DSL Additional Status
DSL Status ID
DSL Stats
DSL Stats ID
Cellular Status
Cellular Stats
Cellular Status ID
SelfTestDiagnostics Start
SelfTestDiagnostics
IP Diagnostics
Ping_Start
Ping Host
Ping NumberOfRepetitions
Ping DiagnosticsState
CPUUsage
MemoryStatus
Reset CPE
Reset USP
Restart CPE
WiFi Radio Status
WiFi Radio Stats
WiFi Radio ID
WiFi SSID Status
WiFi SSID Stats
WiFi SSID ID
WiFi Access Point Status
WiFi Access Point Stats
WiFi Access Point ID
WiFi Groups Status
WiFi Network status

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" (such as an ion multipole device) means "one or more" (for instance, one or more ion multipole device). Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

As will be appreciated by the skilled person, details of the above embodiment may be varied without departing from the scope of the present invention, as defined by the appended claims.

For example, whilst the systems and methods have been described having a single router and mobile device, the external server may manage and receive data and information for many routers and mobile devices. The mobile device does not need to rely on cellular communications to transmit the operating characteristics to the external server. The mobile device may use any suitable communication channel. For example, it may use Wi-Fi connectivity provided by a different router or a different mobile device (e.g., a portable hotspot).

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for managing a router configured to provide internet communications over a first communication protocol, the method comprising the steps of:
determining operating characteristics of the router;
detecting a degradation of router performance; and
transmitting data indicating the determined operating characteristics from the router to a mobile device using a second wireless communication protocol.

2. The method of claim 1 further comprising the step of:
the mobile device transmitting the data indicating the determined operating characteristics to a server in response to the detected degradation, using a third wireless communication protocol.

3. The method of claim 2, wherein the third wireless communication protocol is any one of: a cellular communication protocol, a satellite communication protocol, or a Wi-Fi connection to a second router; and/or
wherein the first communication protocol is a wireless communication protocol and/or Wi-Fi; and/or
wherein the second communication protocol is any one of: Bluetooth, Bluetooth Low Energy, BLE, Zigbee, near field communication, NFC, or a non-Wi-Fi short or midrange protocol.

4. The method of claim 2 or claim 3 further comprising the step of:
the server initiating automatic testing of broadband communications with the router in response to receiving the operating characteristics of the router from the mobile device.

5. The method according to any of claims 2 to 4 further comprising the steps of:
the server applying updated configuration settings to the router based on the operating characteristics of the router transmitted to the server; and/or
the server causing the router to reboot.

6. The method of claim 5, wherein the updated configuration settings are transmitted to the mobile device over the third communications protocol and transmitted to the router from the mobile device over the second communications protocol.

7. The method according to any previous claim further comprising the step of:
the mobile device determining an action to resolve the degradation of router performance based on the received operating characteristics, wherein optionally the action comprises any one or more of:
the mobile device transmitting the data indicating the determined operating characteristics to a server in response to the detected degradation, using a third wireless communication protocol;
the mobile device sending an instruction to the router using the second wireless communication protocol to alter the router configuration;
the mobile device sending an instruction to the router using the second wireless communication protocol to reboot; and/or
the mobile device providing an instruction to the user to change a configuration of the router.

8. The method according to any previous claim, wherein the operating characteristics of the router comprise any one or more of:
internet connection status of the router;
a landline connection status;
a wired internet connection status;
Wi-Fi channel or channels transmitted by the router;
Wi-Fi disabled/enabled;
time since a reboot of the router;
information regarding cable or cables connected to the router;
memory use of the router;
number of connected Wi-Fi clients; and/or
Bluetooth or BLE connection status.

9. The method according to any previous claim, wherein the detected degradation router performance is any one or more of:
a reduction in internet communication service provided by the router;
a reduction in data transmission rate;
loss of a Wi-Fi connection to the mobile device;
a fault with a wired internet connection of the router;
memory usage of the router beyond a threshold amount;
loss of internet provision; and
Wi-Fi channel interference.

10. The method according to any previous claim, wherein the detected degradation of router performance is detected at the mobile device by an application of the mobile device; and/or wherein the detected degradation of communications with the router is detected at the router.

11. The method according to any previous claim, wherein the data transmitted to the mobile device indicating the determined operating characteristics from the router are received by an application on the mobile device.

12. A system comprising
a router configured to:
provided internet communications over a first communication protocol;
determine operating characteristics of the router;
receive a request for the operating characteristics from a mobile device; and
in response to the request transmit data indicating the determined operating characteristics from the router to the mobile device using a second wireless communication protocol; and
a mobile device configured to:
request the operating characteristics of the router;
receive the operating characteristics of the router over the second wireless communication protocol; and
detect a degradation of router performance.

13. The system of claim 12, wherein the mobile device is further configured to:
transmit the data indicating the determined operating characteristics to a server in response to the detected degradation, using a third wireless communication protocol, the system further comprising:
a server configured to:
receive the operating characteristics.

14. The system of claim 13, wherein the server is further configured to apply updated configuration settings and/or send operation instructions to the router based on the operating characteristics of the router received from the mobile device, wherein the updated configuration settings and/or send operation instructions are transmitted to the mobile device over the third communications protocol and transmitted to the router from the mobile device over the second communications protocol.

15. A computer-readable medium comprising instructions which, when executed by a computer, cause the computer to carry out steps of a method for managing a router configured to provide internet communications over a first wireless communication protocol, the method comprising the steps of:
determining operating characteristics of the router;
detecting a degradation of router performance; and
transmitting data indicating the determined operating characteristics from the router to a mobile device using a second wireless communication protocol.
